# EUROPEAN PATENT APPLICATION

(11) **EP 2 291 035 A1**
(43) Date of publication of application: **02.03.2011**
(21) Application number: 09738704.7
(22) Date of filing: 13.04.2009
(51) Int. Cl.: H04W 48/16, H04W 4/06, H04W 36/30, H04W 36/38

(54) **MOBILE COMMUNICATION SYSTEM, MOBILE STATION DEVICE, BASE STATION DEVICE, AND MOBILE COMMUNICATION METHOD**

(30) Priority: 28.04.2008 JP 2008117758
(71) Applicant: Sharp Kabushiki Kaisha, Osaka-shi, Osaka 545-8522 (JP)
(72) Inventor: TSUBOI, Hidekazu, Osaka-shi, Osaka 545-8522 (JP); UEMURA, Katsunari, Osaka-shi, Osaka 545-8522 (JP)
(74) Representative: Müller - Hoffmann & Partner
(86) International application number: PCT/JP2009/057454
(87) International publication number: WO 2009/133767

(57) **Abstract**

A mobile communication system including a mobile station device and a base station device, wherein the mobile station device includes: a reception quality measurement unit which measures reception qualities based on signals transmitted from neighboring base station devices; a determination unit which determines a base station device with which the mobile station device communicates, based on a service tried to receive by the mobile station device and the reception qualities measured by the reception quality measurement unit; and a communication unit which communicates with the base station device determined by the determination unit.

## Description

### TECHNICAL FIELD

The present invention relates to a mobile communication system, a mobile station device, a base station device, and a mobile communication method.
This application claims priority from and the benefits of Japanese Patent Application No. 2008-117758 filed on April 28, 2008, the disclosure of which is incorporated herein by reference.

### BACKGROUND ART

At present, Evolved Universal Terrestrial Radio Access (EUTRA) is being studied by the standardization body 3rd Generation Partnership Project (3GPP) (Non-Patent Document 1).
The purpose of EUTRA is to increase the communication rate by introducing some of the technologies which are being studied for a fourth generation system in a third-generation frequency band.

An orthogonal frequency division multiplexing access (OFDMA) scheme is used as a communication scheme in EUTRA. OFDMA is a communication scheme robust against multipath interference and suitable for high-speed transmission.
In relation to upper layer operations as data transmission control and resource management control related to EUTRA, low delay and low overhead are implemented and a technique as simple as possible is used.

In a cellular mobile communication scheme, a mobile station device needs to be wirelessly synchronized in advance with a base station device within a cell or sector. Thus, the base station device transmits a synchronization channel (SCH) having a predetermined configuration to the mobile station device. The mobile station device synchronizes with the base station device by detecting the synchronization channel transmitted from the base station device. The cell or sector is a communication area of the base station device.

In EUTRA, a primary SCH (P-SCH) and a secondary SCH (S-SCH) are used as the synchronization channels. The mobile station device identifies each cell (or sector) by a cell ID determined from signals of the P-SCH and the S-SCH.
The cell ID is defined by combinations of 3 types of primary synchronization channels and 168 types of secondary synchronization channels. The number of combinations is 504 types (3×168=504).

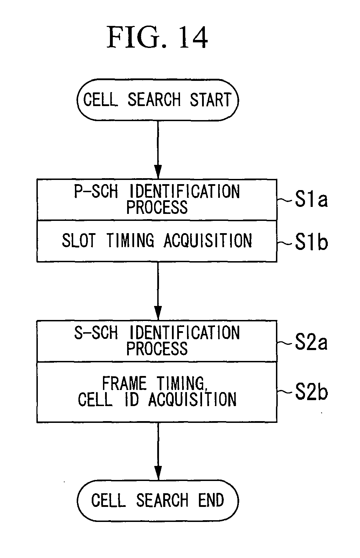

FIG. 14 is a flowchart showing a cell search procedure of a mobile station device in EUTRA. The mobile station device performs a P-SCH identification process of correlating a replica signal of a P-SCH with a received signal (step S1a). Thereby, the mobile station device acquires a slot timing (step S1b).
The mobile station device performs an S-SCH identification process of correlating a replica signal of an S-SCH with a received signal (step S2a). Thereby, the mobile station device acquires a frame timing by a transmission pattern of the obtained S-SCH, and also acquires a cell identification (ID) (identification information) for identifying the base station device (step S2b).

A series of controls, that is, a process until the mobile station device wirelessly synchronizes with the base station device and acquires a cell ID of the base station device, is referred to as a cell search procedure.
In the cellular mobile communication scheme including EUTRA, the mobile station device communicates with the base station device within a cell (or sector) as a communication area of the base station device. A cell where the mobile station device is located when the mobile station device is wirelessly connected to a certain base station device is referred to as a serving cell.

On the other hand, a cell located around the serving cell is referred to as a neighboring cell. Hereinafter, when a plurality of base station devices are described, cell IDs of the base station devices may be used. The mobile station device determines a high-quality cell by measuring and comparing reception qualities of a serving cell and a neighboring cell.
At this time, information regarding one or more neighboring cells reported from a serving cell is referred to as a list of neighboring cells. In general, detailed information such as a cell ID of a neighboring cell or service content is not reported from the base station device to the mobile station device in EUTRA.

Specifically, information regarding a cell using the same carrier frequency is not transmitted from the base station device to the mobile station device. When there is a neighboring base station device using a different carrier frequency, only carrier frequency information thereof is transmitted.
An operation in which the mobile station device moves from a serving cell to a neighboring cell and changes a wireless connection cell is referred to as a handover. At this time, a signal to be used by the mobile station device to determine the level of reception quality between cells is referred to as a downlink reference signal.
The downlink reference signal is a predetermined signal sequence corresponding to a cell ID. That is, it is possible to uniquely specify downlink reference signals simultaneously transmitted by corresponding cells by identifying cell IDs (Non-Patent Document 1).

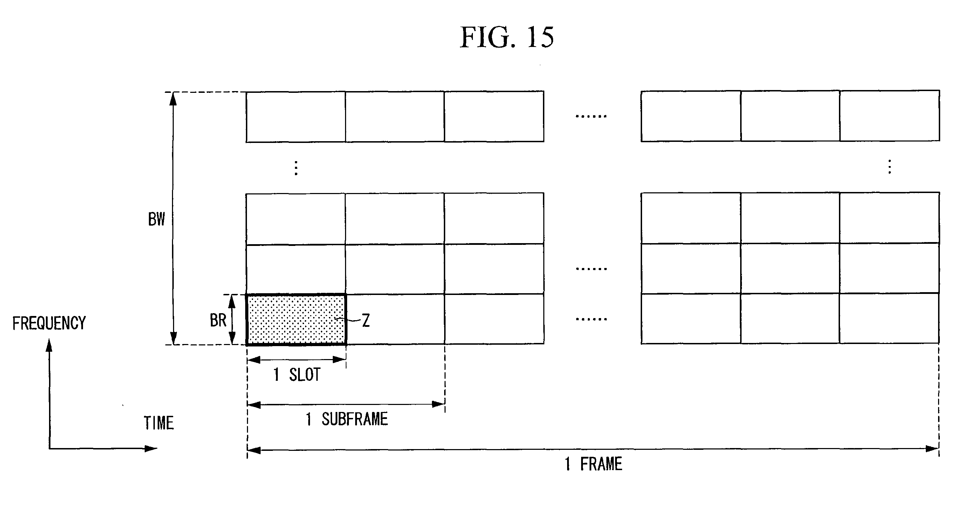

FIG. 15 is a diagram showing an example of the configuration of a radio frame in EUTRA. In FIG. 15, the horizontal axis is a time axis and the vertical axis is a frequency axis.
In a radio frame, a region Z is constituted as one unit (Non-Patent Document 1). The region Z is constituted by a fixed frequency region BR having a set of a plurality of subcarriers in a frequency-axis direction and a fixed transmission time interval (slot).

A transmission time interval having an integer multiple of one slot is referred to as a subframe. A collection of a plurality of subframes is called a frame. In FIG. 15, one subframe includes two slots.
The region Z partitioned by the fixed frequency region BR and the 1-slot length is referred to as a resource block. One frame includes 10 subframes. In FIG. 15, BW denotes a system bandwidth and BR denotes a bandwidth of the resource block.

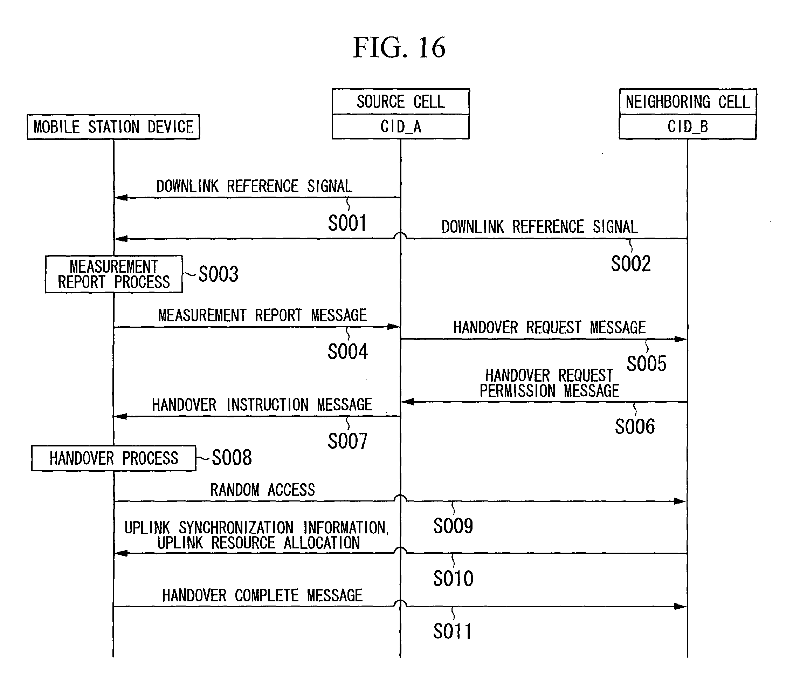

FIG. 16 is a sequence diagram showing an example of a handover procedure. A process shown in FIG. 16 indicates a control process in which a handover is started from a state in which a mobile station device communicates with a handover source cell (also referred to as a source cell), and the handover directed to a handover destination cell (also referred to as a neighboring cell) is performed.
A cell ID of the source cell is CID_A. Also, a cell ID of the neighboring cell is CID_B. Thereafter, the procedure will be described using the cell IDs.

Here, the mobile station device respectively receives downlink reference signals of the source cell CID_A and the neighboring cell CID_B (step S001 and S002). The mobile station device performs a measurement report process of measuring reception qualities obtained from the respective reference signals (step S003).
The mobile station device reports a measurement result of the measurement report process as a measurement report message to the source cell CID_A (step S004).
When the source CID_A determines that a handover to the neighboring cell CID_B is necessary from content of the measurement report message, a handover request message is transmitted from the source cell CID_A to the neighboring cell CID_B (step S005). Thereby, the source cell CID_A reports the necessity of the handover for the mobile station device to the neighboring cell CID_B, and requests preparation for the handover.

When determining that the handover is executable, the neighboring cell CID_B receiving the handover request message reports a handover request permission message to the source cell CID_A (step S006).
The source cell CID_A receiving the handover request permission message transmits a handover instruction message (also referred to as a handover command) to the mobile station device (step S007).

The handover process is started by the mobile station device receiving the handover instruction message. If information regarding a handover execution time is included in the handover instruction message, the mobile station device performs the handover process when the handover execution time is reached.
Immediate handover execution may be designated in the handover instruction message. In any case, the mobile station device switches radio frequency or control parameter of a transmission/reception circuit designated by the handover instruction message when the handover execution time is reached. The mobile station device performs a downlink synchronization establishment process for establishing downlink wireless synchronization with the neighboring cell CID_B (step S008).

Control parameters for the downlink synchronization establishment process are included in the previous handover instruction message, or are broadcast or reported in advance from the source cell CID_A to the mobile station device.
For downlink synchronization establishment with the neighboring cell CID_B, the mobile station device for which the downlink synchronization establishment is completed performs random access transmission (step S009). This process may be referred to as a handover access.

Originally, a (contention-based) channel on which a collision may occur was used in random access. On the other hand, a method of allocating a preamble sequence (dedicated preamble) for each mobile station device in advance by using the handover instruction message so as to perform (contention-free) random access transmission in which a collision does not occur has been proposed (Non-Patent Document 2).
The mobile station device performs random access transmission using a preamble sequence designated by the handover instruction message. The base station device of the neighboring cell CID_B receiving the preamble sequence determines that the handover for the mobile station device is completed. The base station device of the neighboring cell CID_B notifies the mobile station device of uplink synchronization information for adjusting an uplink transmission timing and uplink resource allocation information for transmitting a handover complete message (also referred to as a handover confirm) (step S010).

The mobile station device adjusts an uplink transmission timing based on the information received in step S010. The mobile station device transmits the handover complete message to the neighboring cell CID_B using the designated uplink resources (step S011). Thereby, the mobile station device completes the handover process from the source cell CID_A to the neighboring cell CID_B.
The above-described handover is performed when the mobile station device communicates with a serving cell (in an active state). On the other hand, the handover is not performed when the mobile station devices does not communicate with the serving cell (in an idle state), and cell reselection described below is performed.

If a condition that the reception quality of the source cell CID_A is less than a preset threshold value, or the like is satisfied, the mobile station device detects neighboring cells. The mobile station device acquires information of a corresponding cell from broadcast information transmitted from the neighboring cells.
The mobile station device measures the reception quality of a downlink reference signal based on the acquired information for a fixed period of time. As a result, the mobile station device waits in a cell of the best reception quality in which a connection of its own station is permitted.

In Non-Patent Document 1, a downlink reference signal and a downlink reference signal (DL-RS) are described, but the meanings thereof are the same.

Furthermore, in EUTRA, a cell (an MBMS-dedicated cell which is also referred to as a dMBMS cell) from which a multimedia broadcast/multicast service (MBMS) is transmitted in a dedicated frequency band using a multicast channel is being studied.
A method of lengthening a cyclic prefix (CP) so that delay waves from a plurality of base station devices are also received as signals has been proposed. In this method, a decrease in an amount of information capable of being transmitted is compensated for by narrowing a subcarrier interval.
A mixed cell where communication between a base station device and a user is performed using a shared channel, and a unicast cell where transmission using a multicast channel is not performed exist as other cells (Non-Patent Document 2).
In the mixed cell, individual communication with each mobile station device is performed using downlink and uplink control channels and downlink and uplink shared channels on which user data or an incoming call signal is transmitted in addition to the multicast channel. That is, it is possible to receive a multicast service using a multicast channel such as a broadcast for a mobile terminal and to receive a service such as data communication or voice communication using a shared channel which is a function of a mobile phone from the related art.
The multicast channel is not used in the unicast cell. Thus, when a service such as a broadcast for a mobile terminal is received, communication is performed using a shared channel for each mobile station device. Therefore, the number of mobile station devices trying to perform reception is increased, and a large amount of radio resources is consumed.

Research is being conducted to acquire synchronization using an SCH and acquire MBMS area information as described above even in the dMBMS cell (Non-Patent Document 3).
However, no shared channel is used in the dMBMS cell. Thus, a user who waits for a phone call or a user who performs communication needs to communicate with a unicast cell or a mixed cell while a signal is received from the dMBMS cell.

That is, it is necessary to acquire synchronization with the unicast cell or the mixed cell simultaneously upon synchronization with the dMBMS cell.
When a mobile station device trying to receive the MBMS service performs a handover process, presence/absence information of the MBMS service is added to a list of cells adjacent to a serving cell. There has been proposed a technique of adding an offset to a threshold value for performing the above-described measurement or reception quality of a reselection determination so as to encourage a handover directed to a neighboring cell from which an MBMS service is provided when the mobile station device is in synchronization with a serving cell from which an MBMS service is not provided using the information (Non-Patent Document 4).

As a method of increasing a probability that a mobile station device trying to receive the MBMS service is in synchronization with an optimal cell, a method disclosed in Non-Patent Document 4 is known. However, a list of neighboring cells is used in this method. Thus, this method may not be used if the list of neighboring cells is not used or if only limited information (for example, a carrier frequency) is reported.
The setup of an SCH in the dMBMS cell is being studied, but there are problems such as the following (1) to (3).

(1) If there is a dMBMS cell narrowing a subcarrier interval as described above, it is necessary to receive a plurality of types of synchronization channels, and the processing load on the mobile station device is increased.
(2) If the dMBMS cell narrowing the subcarrier interval uses the same subcarrier interval or sequence as that used in another unicast cell, a mobile station device trying to synchronize only an SCH (or a channel including even a channel necessary for synchronization) with the unicast cell also detects the dMBMS cell, and a delay occurs in a synchronization process.
(3) In a situation where it is necessary to lengthen a CP length by considering a delay wave in the case of the above-described (2), a CP length of a synchronization channel may be the same as that of the unicast cell, and thus inter-symbol interference may occur, leading to characteristic degradation.

Non-Patent Document 1: 3GPP TS (Technical Specification) 36.211, Physical Channels and Modulation. V8.0.0 (http://www.3gpp.org/ftp/Specs/html-info/36211.htm)
Non-Patent Document 2: 3GPP TS 36.300 V8.0.0(2007-3), Overall description; Stage 2 (http://www.3gpp.org/ftp/Specs/html-info/36300.htm)
Non-Patent Document 3: Nokia Siemens Networks, Nokia, Huawei, Ericsson, "L1 Support of Dedicated MBSFN Carriers", R1-080326, 3GPP TSG-RAN WG1 Meeting # 51 bis, Selvilla, Spain, 14-18 January 2008
Non-Patent Document 4: Panasonic, "Cell detection and reselection information for MBMS", R2-074851, 3GPP TSG-RAN WG2 Meeting # 51 bis, Jeju, Korea, 5-9 November 2007

### DISCLOSURE OF INVENTION

### Problem to be Solved by the Invention

The present invention has been made in view of the above-described circumstances, and an object of the present invention is to provide a mobile communication system, a mobile station device, a base station device, and a mobile communication method that can improve the reception characteristics or frequency use efficiency without imposing a heavy load on radio resources or a mobile station device.

### Means for Solving the Problem

(1) The present invention has been made to solve the above-described problems. According to an aspect of the present invention, there is provided a mobile communication system including a mobile station device and a base station device, wherein the mobile station device includes: a reception quality measurement unit which measures reception qualities based on signals transmitted from neighboring base station devices; a determination unit which determines a base station device with which the mobile station device communicates, based on a service tried to receive by the mobile station device and the reception qualities measured by the reception quality measurement unit; and a communication unit which communicates with the base station device determined by the determination unit.

(2) According to another aspect of the present invention, there is provided a mobile communication system including a mobile station device and a base station device, wherein the mobile station device that is communicating with the base station device includes: a reception quality measurement unit which measures reception qualities based on signals transmitted from neighboring base station devices around the base station device with which the mobile station device is communicating and a service execution situation of the base station device with which the mobile station device is communicating; a first transmission unit which transmits information of a service tried to receive by the mobile station device and information of the reception qualities measured by the reception quality measurement unit to the base station device; and a communication unit which communicates with a base station device specified by information of the base station device transmitted from the base station device, and the base station device includes: a determination unit which determines a base station device with which the mobile station device communicates, based on the service information and the reception quality information transmitted by the first transmission unit and the service execution situation of its own base station device; and a second transmission unit which transmits information of the base station device determined by the determination unit to the mobile station device.

(3) In the mobile communication system according to the aspect of the present invention, the reception quality measurement unit may change a reception quality measurement cycle based on the information of the base station device transmitted by the second transmission unit and the service execution situation of the base station device.

(4) In the mobile communication system according to the aspect of the present invention, the information of the base station device may indicate one of a service providing cell absence, a reception quality dissatisfaction, and a handover instruction.

(5) In the mobile communication system according to the aspect of the present invention, the service may be a multimedia broadcast/multicast service.

(6) In the mobile communication system according to the aspect of the present invention, a base station device which provides a multimedia broadcast/multicast service may prevent a synchronization channel from being transmitted to the mobile station.

(7) According to still another aspect of the present invention, there is provided a mobile station device that communicates with a base station device, the mobile station device including: a reception quality measurement unit which measures reception quality based on a signal transmitted from the base station device and a service execution situation of the base station device; a determination unit which determines a base station device with which the mobile station device communicates, based on a service tried to receive by the mobile station device and the reception quality measured by the reception quality measurement unit; and a communication unit which communicates with the base station device determined by the determination unit.

(8) According to still another aspect of the present invention, there is provided a base station device that communicates with a mobile station device, the base station device including: a determination unit which determines a base station device with which the mobile station device communicates, based on information of a service tried to receive by the mobile station device and information of reception qualities of signals, transmitted from neighboring base station devices, measured by the mobile station device; and a second transmission unit which transmits information of the base station device determined by the determination unit to the mobile station device.

(9) According to still another aspect of the present invention, there is provided a mobile communication method using a mobile station device and a base station device, the mobile communication method including: measuring, by the mobile station device, reception qualities based on signals transmitted from neighboring base station devices; determining, by the mobile station device, a base station device with which the mobile station device communicates, based on a service tried to receive by the mobile station device and the reception qualities measured by the reception quality measurement unit; and communicating, by the mobile station device, with the base station device determined by the determination.

(10) According to still another aspect of the present invention, there is provided a mobile communication method using a mobile station device and a base station device, the mobile communication method including: measuring, by the mobile station device, reception qualities based on signals transmitted from neighboring base station devices; transmitting, by the mobile station device, information of a service tried to receive by the mobile station device and information of the reception qualities measured in the measurement to the base station device; communicating, by the mobile station device, with a base station device specified by information of the base station device transmitted from the base station device, determining, by the base station device, a base station device with which the mobile station device communicates, based on the service information and the reception quality information transmitted in the transmission; and transmitting information of the base station device determined in the determination to the mobile station device.

### Effect of the Invention

A mobile communication system, a mobile station device, a base station device, and a mobile communication method of the present invention can improve the reception characteristics or frequency use efficiency without imposing a heavy load on radio resources or a mobile station device.

### BRIEF DESCRIPTION OF THE DRAWINGS

FIG. 1 is a schematic block diagram showing the configuration of a mobile station device 100 according to a first embodiment of the present invention.
FIG. 2 is a schematic block diagram showing the configuration of a downlink reference signal processing unit 107 (FIG. 1) of the mobile station device 100 according to the first embodiment of the present invention.
FIG. 3 is a schematic block diagram showing the configuration of a base station device 200 according to the first embodiment of the present invention.
FIG. 4 is a diagram showing an example of a cell configuration according to the first embodiment of the present invention.
FIG. 5 is a sequence diagram showing a process of a mobile communication system according to the first embodiment of the present invention.
FIG. 6 is a flowchart showing a cell reselection process in the mobile station device 100 of an idle state according to the first embodiment of the present invention.
FIG. 7 is a sequence diagram showing a process of a mobile communication system according to a second embodiment of the present invention.
FIG. 8 is a flowchart showing a handover process in the mobile station device 100 in an active state according to the second embodiment of the present invention.
FIG. 9 is a flowchart showing a handover process in a base station device according to the second embodiment of the present invention.
FIG. 10 is a flowchart showing a handover process of step S909 of FIG. 9.
FIG. 11 is a flowchart showing a handover process of step S910 of FIG. 9.
FIG. 12 is a flowchart showing another example of the process of the mobile communication system according to the second embodiment of the present invention.
FIG. 13 is a sequence diagram showing a process of the mobile communication system according to a third embodiment of the present invention.
FIG. 14 is a flowchart showing a cell search sequence of the mobile station device in EUTRA.
FIG. 15 is a diagram showing an example of the configuration of a radio frame in EUTRA.
FIG. 16 is a sequence diagram showing an example of a handover procedure.

### BEST MODE FOR CARRYING OUT THE INVENTION

Embodiments of the present invention will now be described with reference to the drawings.
Physical channels related to the respective embodiments of the present invention are a physical broadcast channel, a physical uplink shared channel, a physical downlink shared channel, a physical downlink control channel, a physical uplink control channel, a physical random access channel, a synchronization channel (SCH), a reference signal, and a physical multicast channel (PMCH). Transport channels are a broadcast channel, an uplink shared channel, a downlink shared channel, a paging channel on which an incoming call signal is transmitted, and a multicast channel.
Logical channels are a common control channel, an individual control channel, and an individual traffic channel allocated to the uplink shared channel; a paging control channel allocated to the paging channel; a broadcast control channel allocated to the broadcast channel and the downlink shared channel; a common control channel, an individual control channel, and an individual traffic channel allocated to the downlink shared channel; and a multicast control channel and a multicast traffic channel allocated to the downlink shared channel and the multicast channel.
The physical multicast channel corresponds one-to-one to a multicast channel of the transport channels. Thus, the physical multicast channel is referred to as only the multicast channel in each embodiment of the present invention.

In each embodiment of the present invention, data of the individual traffic channel of uplink and the individual traffic channel and the multicast traffic channel of downlink is classified as traffic data.
Signals of the common control channel, the shared control channel, the individual control channel, and the multicast control channel of downlink and the common control channel and the shared control channel of uplink among the logical channels, and an uplink reference signal are classified as upper-layer control signals.
Signals of the physical uplink control channel and the physical downlink control channel among the physical channels are classified as lower-layer control signals.
A signal of the broadcast control channel among the logical channels is classified as broadcast information.
The SCH and the downlink reference signal are classified as radio signals.

The SCH has been described above.

The broadcast control channel is transmitted from a base station device to a mobile station device for the purpose of reporting control parameters to be commonly used by mobile station devices within a cell. In addition to a primary broadcast channel (P-BCH) as the broadcast control channel, there is a dynamic broadcast channel (D-BCH).
The P-BCH is preset to be transmitted in a predetermined cycle in time and frequency. For example, the P-BCH is transmitted by a center subcarrier of a subframe #0. The mobile station device can receive the P-BCH in a cell identified by a cell ID. The P-BCH is an upper-layer control signal among signals allocated to the broadcast channel of the transport channels.
On the other hand, the D-BCH is traffic data to be transmitted on the downlink shared channel of the transport channels. Also, a transmission position of the D-BCH is variable for each cell.

The physical multicast channel is a physical channel for transmitting the multicast control channel and the multicast traffic channel of the logical channels. The physical multicast channel provides service to a wide area by transmitting the same MBMS from a plurality of cells.
To cover the wide area, a guard interval used upon transmission of the physical multicast channel is longer than that used upon transmission of another physical channel.

The downlink reference signal is a pilot signal to be transmitted at a substantially fixed power for each cell. The downlink reference signal is a signal which is periodically repeated at a predetermined time interval (for example, 1 frame). The mobile station device uses the downlink reference signal to determine the reception quality of each cell by receiving the downlink reference signal at a predetermined time interval.
The downlink reference signal is used as a reference signal for demodulating the physical downlink shared channel and the physical downlink control channel transmitted simultaneously with the downlink reference signal.
A sequence used for the downlink reference signal is a sequence capable of being identified uniquely for each cell, and an arbitrary sequence is available.

Next, synchronization with the dMBMS cell will be described.
The transmission of the SCH for synchronization from the dMBMS cell as described above affects an increase of a load on the mobile station device or a degradation of reception characteristics or the like.
Thus, a method of performing synchronization with the dMBMS cell without transmitting the SCH from the dMBMS cell will be described in the subsequent embodiments.

Even the case of transmitting a signal to be used for a synchronization process such as the SCH from the dMBMS cell is applicable to the embodiment of the present invention.
That is, alternatively, it is possible to transmit a known signal from the dMBMS cell to a dedicated terminal for dMBMS reception so as to compensate for a frequency offset after synchronization with the dMBMS cell or improve synchronization accuracy.

### (First Embodiment)

First, the first embodiment of the present invention will be described. This embodiment relates to a mobile station device of an idle state.

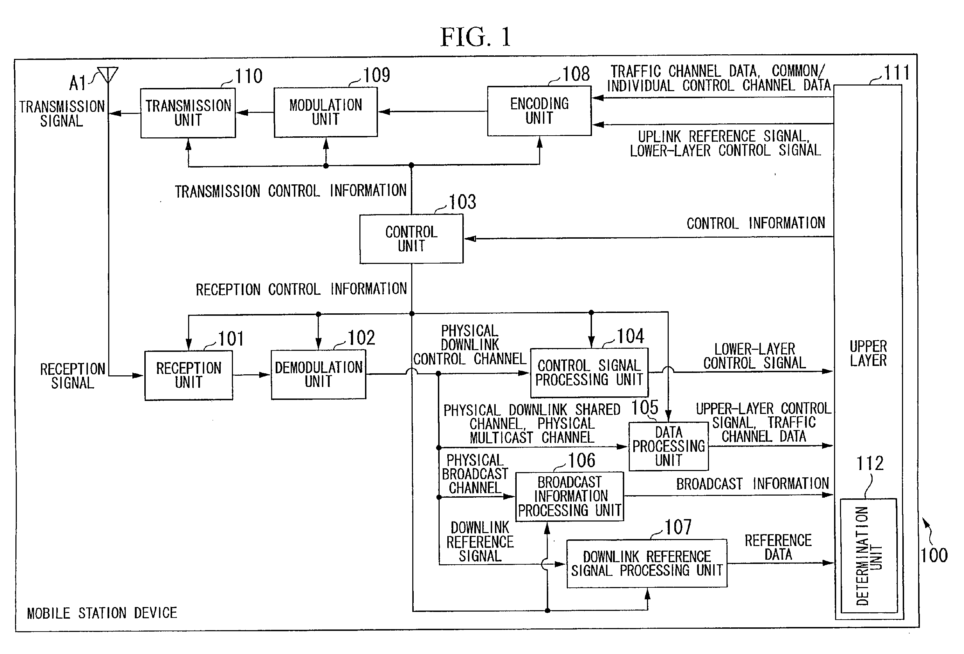

FIG. 1 is a schematic block diagram showing the configuration of the mobile station device 100 according to the first embodiment of the present invention. The mobile station device 100 includes a reception unit 101, a demodulation unit 102, a control unit 103, a control signal processing unit 104, a data processing unit 105, a broadcast information processing unit 106, a reference signal processing unit 107, an encoding unit 108, a modulation unit 109, a transmission unit 110, an upper layer 111, and an antenna A1.
Also, the upper layer 111 has a determination unit 112.

The reception unit 101 receives a signal transmitted by a base station device via the antenna A1 among signals of a frequency set based on reception control information output by the control unit 103.
The reception unit 101 performs a down-conversion process or the like for the signal output by the antenna A1, and outputs the down-converted signal to the demodulation unit 102.
The demodulation unit 102 demodulates the signal output by the reception unit 101 based on the reception control information output by the control unit 103. The demodulation unit 102 classifies the demodulated signal into a physical downlink shard channel, a physical multicast channel, a physical downlink control channel, a physical broadcast channel, or a downlink reference signal.
The reception control information includes a reception timing, a multiplexing method, resource arrangement information, and demodulation information for each channel.

If each classified channel is the physical downlink shared channel or the multicast channel, the channel is output to the data processing unit 105. In the case of the physical downlink control channel, the channel is output to the control signal processing unit 104. In the case of the physical broadcast channel, the channel is output to the broadcast information processing unit 106. In the case of the downlink reference signal, the channel is output to the reference signal processing unit 107.
Channels other than the above-described channels are respectively output to other channel processing units, but description of this embodiment is not affected thereby, and therefore a description thereof is omitted.

The data processing unit 105 extracts traffic channel data and an upper-layer control signal from the physical downlink shared channel and the physical multicast channel output by the demodulation unit 102, and outputs the traffic channel data and the upper-layer control signal to the upper layer 111.
The control signal processing unit 104 extracts a lower-layer control signal from the physical downlink control channel output by the demodulation unit 102, and outputs the lower-layer control signal to the upper layer 111.
The broadcast information processing unit 106 extracts broadcast information (P-BCH information) from the physical broadcast channel output by the demodulation unit 102, and outputs the broadcast information to the upper layer 111.
The downlink reference signal processing unit 107 extracts reference data from the downlink reference signal output by the demodulation unit 102, and outputs the reference data to the upper layer 111.
Control information is output from the upper layer 111 to the control unit 103.

On the other hand, traffic channel data and common/individual control channel data are output from the upper layer 111 to the encoding unit 108, and are encoded as physical uplink shared channel signals.
An uplink reference signal and a lower-layer control signal are output from the upper layer 111 to the encoding unit 108, and are encoded as physical control channel signals.
The control unit 103 outputs transmission control information to the encoding unit 108, the modulation unit 109, and the transmission unit 110.
The transmission control information includes a transmission timing or a multiplexing method related to an uplink channel, arrangement information of transmission data, and information related to modulation or transmission power of each channel.

Based on the transmission control information, all transmission data encoded by the encoding unit 108 is output to the modulation unit 109.
The modulation unit 109 modulates the transmission data by an appropriate modulation scheme according to information indicated by the control unit 103, and outputs the modulated transmission data to the transmission unit 110.
The data modulated by the modulation unit 109 is output to the transmission unit 110, appropriately power-controlled, and transmitted from the antenna A1 to the base station device based on a channel arrangement.
Since other configurations of the mobile station device 100 are not directly related to this embodiment, a description thereof is omitted.
The operations of the reception unit 101, ..., the transmission unit 110 of the mobile station device 100 are generally controlled by the upper layer 111.

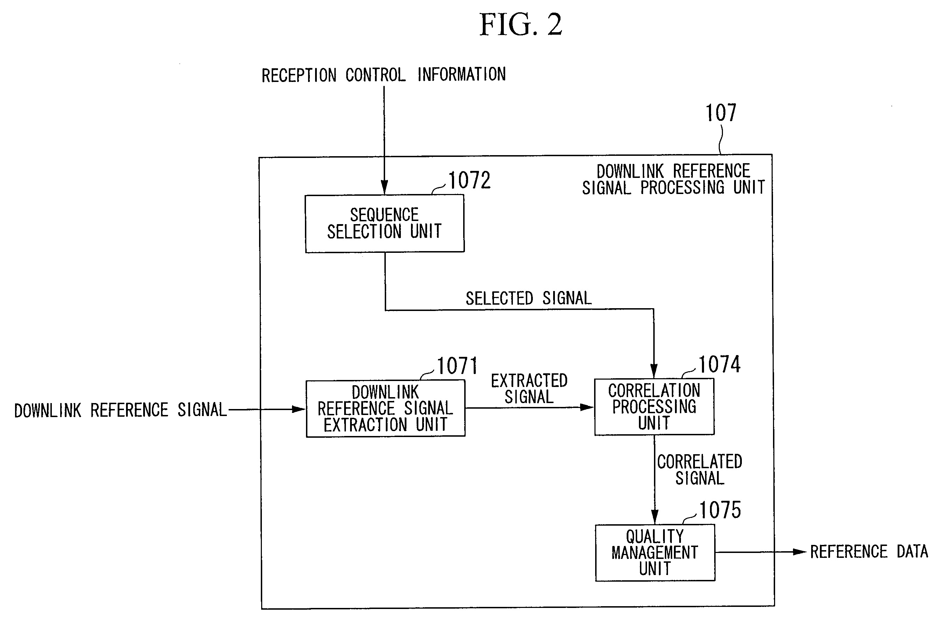

FIG. 2 is a schematic block diagram showing the configuration of the downlink reference signal processing unit 107 (FIG. 1) of the mobile station device 100 according to the first embodiment of the present invention. The downlink reference signal processing unit 107 includes a downlink reference signal extraction unit 1071, a sequence selection unit 1072, a correlation processing unit 1074, and a quality management unit 1075.

Reception control information from the control unit 103 (FIG. 1) is input to the sequence selection unit 1072. For example, the reception control information necessary for the sequence selection unit 1072 is a frequency bandwidth or reception time information, reception frequency information, a cell ID, or the like. The reception time information is frame information, subframe information, slot information, or the like. The reception frequency information is a reception resource block number, a subcarrier number, or the like.

The sequence selection unit 1072 selects or generates a sequence of an appropriate downlink reference signal to be used for demodulation based on reception control information input from the control unit 103 (FIG. 1), and outputs the signal as a selected signal to the correlation processing unit 1074.
The received downlink reference signal is input to the downlink reference signal extraction unit 1071. According to the reception control information, the downlink reference signal extraction unit 1071 rearranges the input downlink reference signal in order of signal sequence, and outputs the rearranged signal as an extracted signal to the correlation processing unit 1074.

The correlation processing unit 1074 performs a correlation process for the selected signal and the extracted signal based on the cell ID and outputs a correlated signal to the quality management unit 1075.
The quality management unit 1074 measures reception quality of each cell ID based on the correlated signal, and outputs reference data to the upper layer 111 (FIG. 1).
Here, the reception quality is a EUTRA carrier received signal strength indicator (RSSI), reference signal received power (RSRP), reference signal received quality (RSRQ), path loss, or the like.

The quality management unit 1075 measures one or more resource blocks in a serving cell or a channel quality indicator (CQI) for each plurality of subcarriers, and outputs reference data to the upper layer 111 (FIG. 1).
If it is possible to perform processing capable of extracting a downlink reference signal and outputting reference data indicating reception quality from the extracted signal, the operation of the downlink reference signal processing unit 107 may use a method other than the processing method described with reference to FIG. 2.

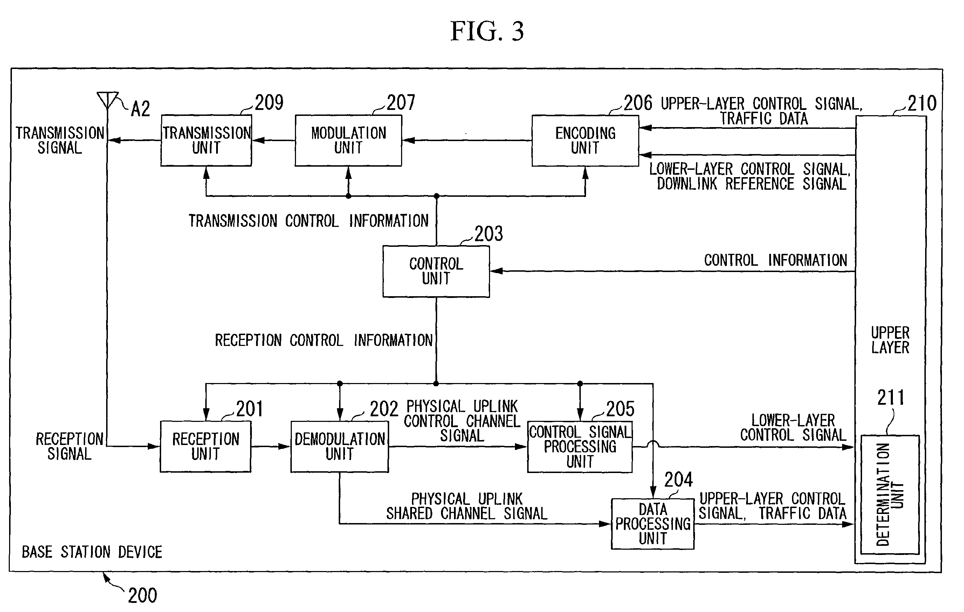

FIG. 3 is a schematic block diagram showing the configuration of the base station device 200 according to the first embodiment of the present invention. The base station device 200 includes a reception unit 201, a demodulation unit 202, a control unit 203, a data processing unit 204, a control signal processing unit 205, an encoding unit 206, a modulation unit 207, a transmission unit 209, an upper layer 210, and an antenna A2.
The upper layer 210 includes a determination unit 211.

The reception unit 201 receives a reception signal (a transmission signal from the mobile station device 100 (FIG. 1) or another base station device) via the antenna A2.
The control unit 203 outputs reception control information related to data reception control to the reception unit 201, the demodulation unit 202, the data processing unit 204, and the control signal processing unit 205.
The upper layer 210 outputs transmission/reception control information based on schedule information preset by a communication system to the control unit 203.

Based on the reception control information indicated by the control unit 203, reception signals are output from the reception unit 201 to the demodulation unit 202, are divided into a physical uplink shared channel signal and a physical control channel signal, and are respectively demodulated.
Channels other than the above-described channels are respectively output to other channel processing units, but description of this embodiment is not affected thereby, and therefore a description thereof is omitted.

In the case of the physical uplink shared channel signal, all data demodulated by the demodulation unit 202 is output to the data processing unit 204. In the case of the physical uplink control channel signal, all data is output to the control signal processing unit 205.
The data processing unit 204 extracts an upper-layer control signal and traffic data from the physical uplink shared channel signal output by the demodulation unit 202, and outputs the upper-layer control signal and the traffic data to the upper layer 210.
The control signal processing unit 205 extracts a lower-layer control signal from the physical uplink control channel signal output by the demodulation unit 202, and outputs the lower-layer control signal to the upper layer 210.
The lower-layer control signal or the upper-layer control signal also includes quality information of the base station device 200 measured by the mobile station device 100 (FIG. 1) or data (neighboring base station device data) related to the base station device 200 such as cell ID information of a neighboring cell or the like.
Here, if the base station device 200 is a dMBMS cell where an uplink is absent, the data processing unit 204 or the control signal processing unit 205 may not be provided in the base station device 200 and the operation thereof may be stopped.

The upper layer 210 outputs an upper-layer control signal, traffic data, a lower-layer control signal, and a downlink reference signal to the encoding unit 206. In the case of the unicast cell or the mixed cell, the upper-layer control signal further includes a broadcast control channel and a downlink shared control channel.
When the base station device 200 is the mixed cell or the dMBMS cell, the upper-layer control signal includes a multicast control channel.
The control unit 203 outputs transmission control information to the encoding unit 206, the modulation unit 207, and the transmission unit 209. A signal encoded by the encoding unit 206 is output to the modulation unit 207.

According to the transmission control information from the control unit 203, the modulation unit 207 modulates all transmission data in an appropriate modulation scheme, and outputs the modulated data to the transmission unit 209.
After the data modulated by the modulation unit 207 is output to the transmission unit 209 and is appropriately power-controlled, the data is transmitted from the antenna A2 to the mobile station device 100 (FIG. 1) at a frequency set by transmission control information based on a channel arrangement.
Since other configurations of the base station device 200 are not directly related to description of this embodiment, a description thereof is omitted. The operations of the reception unit 201, ..., the transmission unit 209 of the base station device 200 are generally controlled by the upper layer 210.

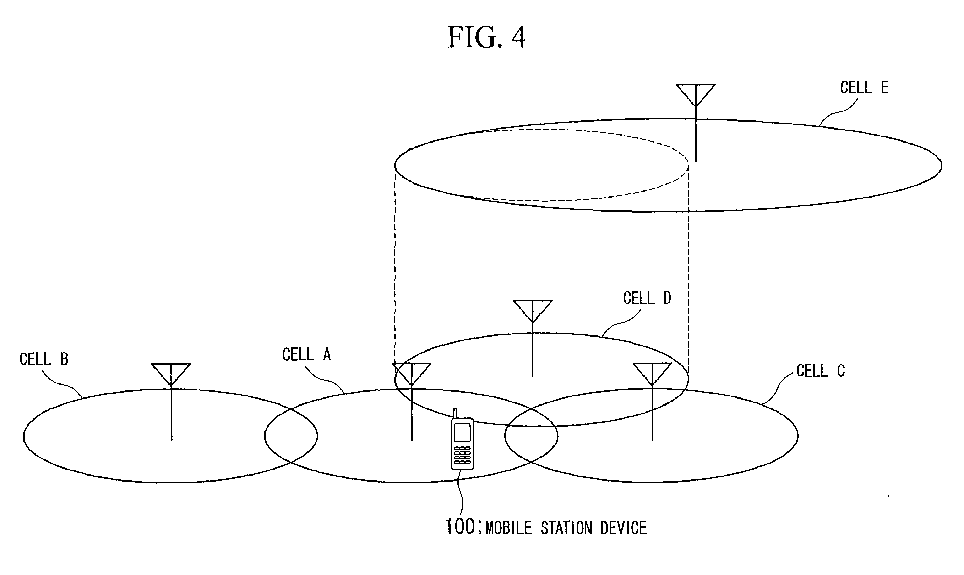

FIG. 4 is a diagram showing an example of a cell configuration according to the first embodiment of the present invention. As shown in FIG. 4, the mobile station device 100 is in a source cell A (cell ID=CID_A). Four neighboring cells B, C, D, and E (cell ID=CID_B, CID_C, CID_D, CID_E) are in an area where measurement by the mobile station device 100 is possible.
The cells A, B, C, and D use the same carrier frequency F1, and only the cell E uses a different carrier frequency F2.

The cells A and C are unicast cells from which an MBMS service is not provided. The cells B and D are mixed cells. The cell E is a dMBMS cell. The cell E may be configured by transmitting a signal from a single base station device, and may be configured by transmitting the same signal from a plurality of base station devices.
The cell D in the same area as a part of the cell E acquires and broadcasts information regarding the cell E as a dMBMS cell.

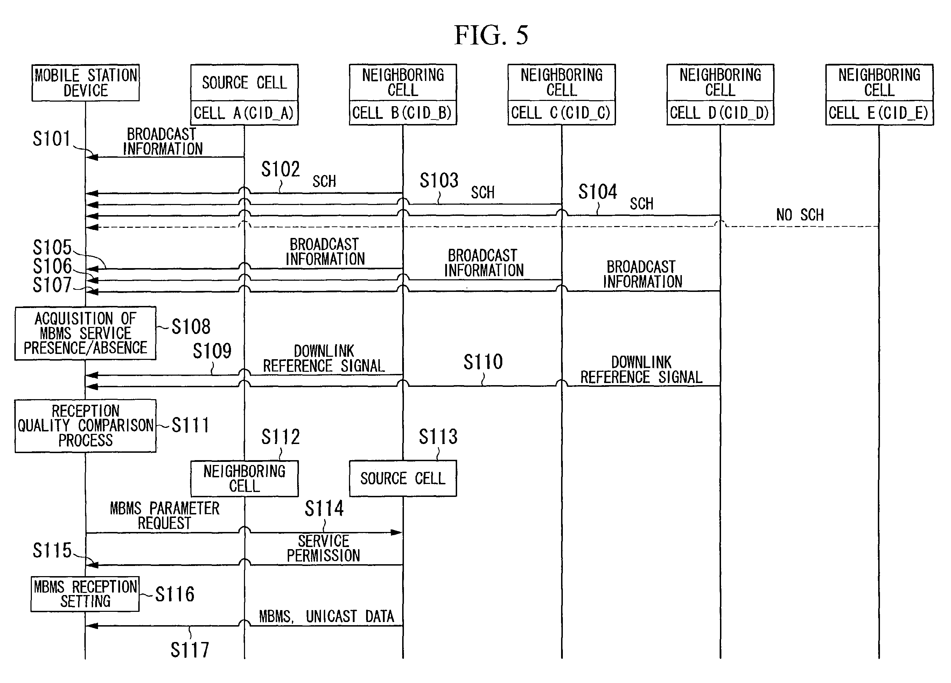

FIG. 5 is a sequence diagram showing a process of the mobile communication system according to the first embodiment of the present invention. FIG. 5 shows a cell reselection process in the mobile station device 100 of the idle state.
The mobile station device 100 is in a state before the measurement of reception qualities of a serving cell and neighboring cells is started or in a state during which the reception qualities are measured. A list of neighboring cells is not provided from the cell A to the mobile station device 100. Here, the case where the mobile station device 100 tries to receive an MBMS service will be described.

First, the mobile station device 100 receives broadcast information transmitted from the cell A (step S101). Thereby, the mobile station device 100 acquires information indicating that the cell A does not provide the MBMS service (step S108). If the presence/absence of the MBMS service is included in a D-BCH, it is necessary to demodulate and acquire a physical downlink shared channel in the data processing unit 105 (FIG. 1).
The mobile station device 100 detects neighboring cells for cell reselection regardless of the signal quality of the cell A. As a cycle in which a detection process is performed is shortened, an idle time of the mobile station device 100 is decreased. In this embodiment, an appropriate cycle is set based on the number of detection trials and the remaining battery capacity. In this embodiment, as the number of detection trials increases, the cycle in which the detection process is performed is set to be long.

The mobile station device 100 respectively receives SCHs from the cells B, C, and D (step S102, S103, and S104). The SCH is not transmitted from the cell E as the neighboring cell to the mobile station device 100.
The mobile station device 100 acquires broadcast information of the detected cells (for example, the cells B, C, and D) (steps S105, S106, and S107). Thereby, the mobile station device 100 determines the presence/absence of a cell from which an MBMS is provided or a cell having dMBMS cell information.
When no corresponding cell is found, the mobile station device 100 waits for a signal from the cell A until a cycle in which the next detection process is performed is reached.

If corresponding cells (here, the cells B and D) are found, the mobile station device 100 receives downlink reference signals of the corresponding cells (step S109 and S110). The mobile station device 100 performs a reception quality comparison process (step S111). If the measured reception quality is greater than a threshold value, the mobile station device 100 selects a corresponding cell. If reception qualities of a plurality of cells are greater than the threshold value, the mobile station device 100 generally selects a cell having the best reception quality.
In FIG. 5, the mobile station device 100 selects the cell B as the cell having the best reception quality, and changes the source cell from the cell A to the cell B (steps S 112 and S 113).

The mobile station device 100 transmits an MBMS parameter request to the cell (here, the cell B) selected by the mobile station device 100 (step S114).
The mobile station device 100 receives a service permission included in a parameter necessary for reception transmitted from the base station device (step S115).
The mobile station device 100 sets MBMS reception based on information of the service permission received in step S115 (step S116).

If a service tried to receive by the mobile station device 100 is provided by a corresponding cell or a cell of a different frequency of the same area as the corresponding cell (wherein the cell of the different frequency is the cell E if the selected cell is the cell D), the mobile station device 100 performs the process of step S117. That is, the reception of MBMS or unicast data is started via a process necessary for service reception such as an authentication/charging process (step S 117).
If user-specific authentication or the like is unnecessary for MBMS reception, the MBMS parameter request signal and the service permission signal of FIG. 5 are unnecessary.

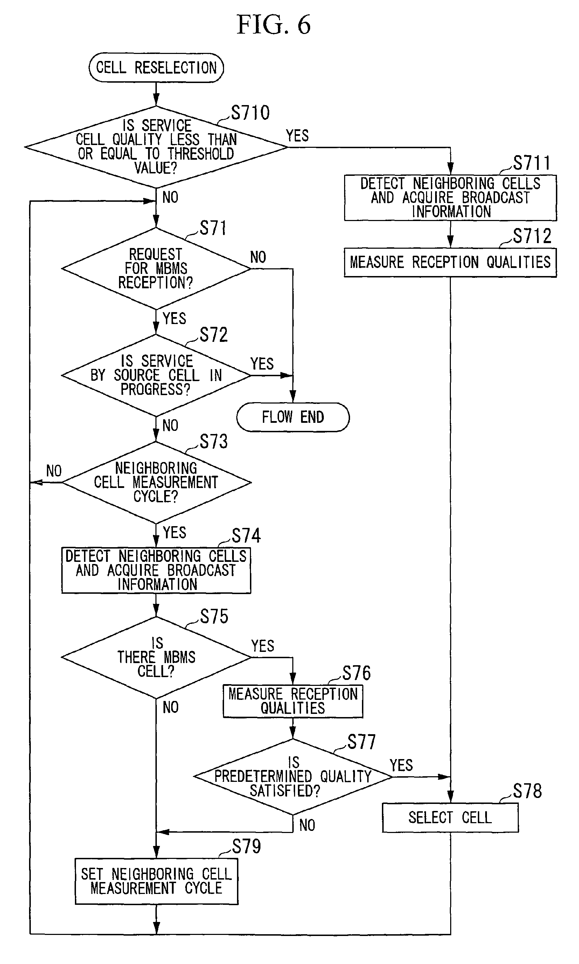

FIG. 6 is a flowchart showing a cell reselection process in the mobile station device 100 of the idle state according to the first embodiment of the present invention.
First, the mobile station device 100 determines whether or not the reception quality based on a downlink reference signal of a cell selected by its own mobile station device 100 is less than or equal to a predetermined threshold value (step S710).
If the reception quality is less than or equal to the threshold value ("Yes" in step S710), the mobile station device 100 detects neighboring cells and acquires broadcast information (step S711). Next, based on downlink reference signals of the detected cells, the mobile station device 100 measures reception qualities and selects a cell having the best reception quality (step S712). The mobile station device 100 performs cell selection for the selected cell (step S78).
If the reception quality is greater than the threshold value in step S710 ("No" in step S710), the mobile station device 100 determines whether or not its own mobile station device 100 tries to receive the MBMS (step S71). If the mobile station device 100 does not try to receive the MBMS ("No" in step S71), the process of the flowchart of FIG. 6 is terminated.
If the mobile station device 100 tries to receive the MBMS ("Yes" in step S71), the source cell determines whether or not a service of MBMS reception is in progress (step S72). When the service of MBMS reception is in progress ("Yes" in step S72), the process of the flowchart of FIG. 6 is terminated.

If the service of MBMS reception is not in progress ("No" in step S72), the mobile station device 100 determines whether or not a neighboring cell measurement cycle is reached, that is, whether or not a timing of a neighboring cell search is reached (step S73). If the timing of the neighboring cell search is not reached ("No" in step S73), the process of step S71 is performed again.
If the timing of the neighboring cell search is reached ("Yes" in step S73), the mobile station device 100 detects neighboring cells and acquires broadcast information (step S74).

The mobile station device 100 determines whether or not there is a cell from which the MBMS is provided from the broadcast information of the detected cells (step S75). If there is no cell from which the MBMS is provided ("No" in step S75), the mobile station device 100 changes a measurement cycle for neighboring cells (step S79), and performs step S71 again.
If there is a cell from which the MBMS is provided ("Yes" in step S75), the mobile station device 100 measures reception quality from a corresponding cell (step S76). The mobile station device 100 determines whether or not the reception quality satisfies a predetermined quality (step S77).
If the reception quality does not satisfy the predetermined quality ("No" in step S77), the mobile station device 100 changes a measurement cycle for neighboring cells (step S79), and performs step S71 again.
If the reception quality satisfies the predetermined quality ("Yes" in step S77), the mobile station device 100 selects the corresponding cell (step S78) and performs step S71 again.
Here, a method of changing the measurement cycle in step S79 will be described.
The mobile station device 100 sets a time Ta of an initial cycle as a cycle Ts at a power-on time or after cell reselection.
If the process of step S79 is performed after the process of step S75, the mobile station device 100 sets Ts+Tb as new Ts by adding a known constant Tb. When the new Ts exceeds the constant Tc, the mobile station device 100 sets Tc as Ts. That is, if there is no neighboring cell from which a service is provided, the cycle is incremented by Tb from a minimum cycle Ta until a known maximum cycle Tc is reached.
If the process of step S79 is performed after the process of step S77, the mobile station device 100 sets the initial cycle Ta as Ts. That is, if a neighboring cell from which a service is provided is detected, the mobile station device 100 shortens a measurement cycle for corresponding cells. Thereby, it is possible to reduce a cell reselection delay.

The mobile communication system according to the first embodiment of the present invention has the mobile station device 100 (FIG. 1) and the base station device 200 (FIG. 3). The downlink reference signal processing unit 107 (also referred to as a reception quality measurement unit) of the mobile station device 100 measures reception quality based on a reference signal transmitted from the base station device of the source cell or the neighboring cell and received by the reception unit 101 (steps S109 and S110 of FIG. 5).
The determination unit 112 included in the upper layer 111 of the mobile station device 100 determines a base station device of a reselection destination which communicates with its own mobile station device 100 based on information of the presence/absence of MBMS as a service tried to receive by its own mobile station device 100 and reception qualities of reference signals, transmitted from a source cell and a neighboring cell, measured by the downlink reference signal processing unit 107 (step S111 of FIG. 5 and the flowchart of FIG. 6).
The transmission unit 110 and the reception unit 101 (also referred to as a communication unit) reselect the base station device determined by the determination unit 112, and communicate with the base station device.

In the related art, a mobile station device does not perform cell detection and reselection in the idle time for power saving in a state in which a list of neighboring cells is absent. In this embodiment, when the reception quality from the source cell is good, the mobile station device 100 changes cell detection and reselection according to a determination of the presence/absence of a service tried to receive by the mobile station device 100 in the source cell and a measurement cycle condition. Thereby, it is possible to efficiently perform detection/measurement for neighboring cells without degrading the accuracy of cell reselection of the related art. Accordingly, the mobile station device 100 can easily receive a service tried to receive by the mobile station device 100.

### (Second Embodiment)

Next, the second embodiment of the present invention will be described.
This embodiment relates to a mobile station device in an active state. Since the mobile station device and a base station device of the second embodiment of the present invention can use the same configurations as the mobile station device 100 (FIG. 1) and the base station device 200 (FIG. 3) according to the first embodiment of the present invention, a detailed description thereof is omitted.
Also, since a cell configuration according to the second embodiment of the present invention is the same as that of the first embodiment (FIG. 4), a description thereof is omitted.

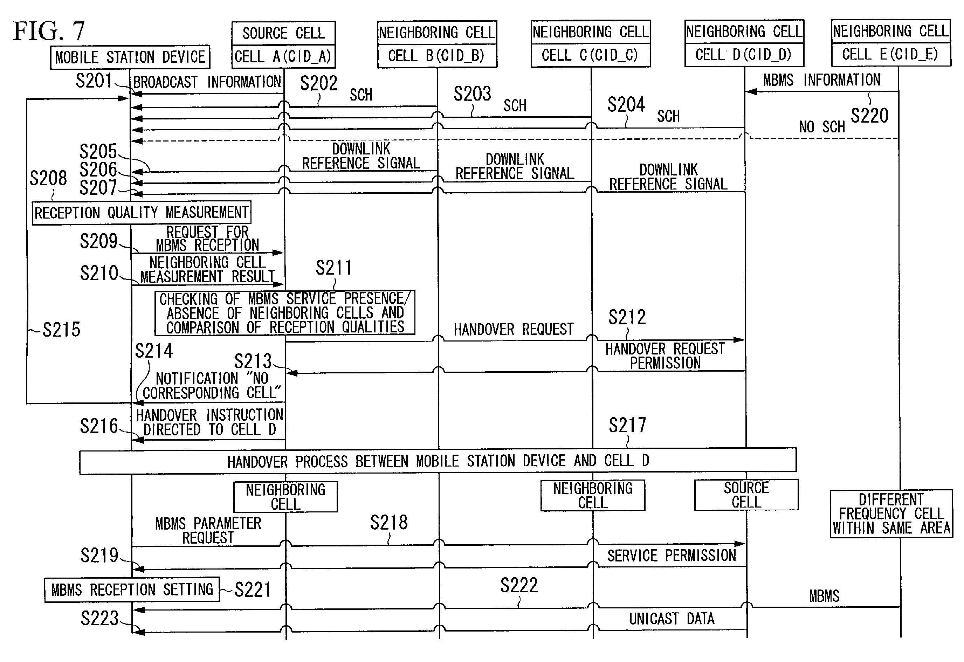

FIG. 7 is a sequence diagram showing a process of the mobile communication system according to the second embodiment of the present invention. FIG. 7 shows a handover process in the mobile station device 100 in an active state.
The mobile station device 100 is in a state before the measurement of reception qualities from a serving cell and neighboring cells is started or in a state during which the reception qualities are measured. A list of neighboring cells is not provided from a cell A (CID_A) to the mobile station device 100.

First, the mobile station device 100 acquires information indicating whether or not an MBMS service is provided from the cell A (CID_A) based on broadcast information received from the cell A (CID_A) (step S201). Here, the case where the mobile station device 100 acquires information indicating that the cell A (CID_A) does not provide the MBMS service will be described.
The mobile station device 100 detects neighboring cells regardless of the reception quality of a signal from the cell A (CID_A). The mobile station device 100 uses downlink reference signals of the detected cells (for example, cells B, C, and D) (steps S205, S206, and S207), and measures reception qualities of the respective cells (step S208).
The cell B (CID_B), the cell C (CID_C), and the cell D (CID_D) as the neighboring cells respectively transmit SCHs to the mobile station device 100 (steps S202, S203, and S204). However, the cell E (CID_E) as the neighboring cell does not transmit an SCH to the mobile station device 100.

The mobile station device 100 reports reception quality information measured for the cell B (CID_B), the cell C (CID_C), and the cell D (CID_D) to the source cell A (CID_A) (step S210). At this time, the mobile station device 100 also notifies the cell A (CID_A) of a request signal for MBMS reception (step S209).
The request signal for MBMS reception may be reported as a lower-layer control signal simultaneously with a notification of a measurement result, may be reported in advance as an upper (L2/L3) layer control signal, and may be reported as one parameter of information (UE capability) indicating the performance of the mobile station device 100 at the time of an initial connection.

The base station device of the source cell A (CID_A) receiving the notification receives the request signal for MBMS reception from the mobile station device 100 and the quality information of the neighboring cells (the cells B, C, and D). When the mobile station device 100 tries to receive the MBMS, the base station device of the cell A (CID_A) searches for the presence/absence of a cell from which the MBMS service is provided or a cell having dMBMS cell information from held neighboring cell information (step S211). If there is no corresponding cell, the base station device of the cell A (CID_A) returns information of "No corresponding cell" to the mobile station device 100 (step S214).
The notification may be transmitted as an upper-layer control signal. Also, the notification may be determined as "No corresponding cell" if a response to the mobile station device 100 is absent for a fixed period of time.

The mobile station device 100 notified of the fact that there is no corresponding cell, or the mobile station device 100 determining that there is no corresponding cell because an explicit response is absent, changes a measurement cycle like a detection process cycle of the idle time if there is no cell from which a service is provided among the detected neighboring cells (step S215). The mobile station device 100 performs cell detection and retransmits a notification if an update exists in a detection result.
When there are corresponding cells in the base station device, the base station device of the cell A (CID_A) transmits a handover request to a cell (for example, the cell D) having the best reception quality among the corresponding cells if reception qualities of the corresponding cells reported from the mobile station device 100 exceed a predetermined threshold value (step S212). On the other hand, the cell D (CID_D) as the neighboring cell notifies the cell A (CID_A) as the source cell of handover request permission (step S213).

The cell A (CID_A) as the source cell transmits a handover instruction directed to the cell D (CID_D) for the mobile station device 100 (step S216).
A handover process is performed between the mobile station device 100 and the cell D (CID_D) (step S217). Thereby, the source cell is changed from the cell A (CID_A) to the cell D (CID_D). Since the handover process is the same as in the related art, a description thereof is omitted here.
When a handover destination is the cell D (CID_D), an MBMS parameter request is transmitted from the mobile station device 100 to the base station device after a handover directed to the cell D (CID_D) (step S218).

On the other hand, MBMS information (a cell ID, a carrier frequency, a band, information necessary for synchronization, or the like) is transmitted from the cell E (CID_E) as the neighboring cell to the cell D (CID_D) (step S220).
A service permission including parameters (MBMS information or the like) necessary for reception is transmitted from the cell D (CID_D) to the mobile station device 100 (step S219).
The mobile station device 100 sets MBMS reception based on information included in the service permission received in step S219 (step S221).

The mobile station device 100 starts the MBMS reception via a process necessary to receive an MBMS service such as an authentication/charging process (step S222) while performing unicast communication with the cell D (CID_D) (step S223).
If user-specific authentication for the MBMS reception is unnecessary, the MBMS parameter request signal and the service permission signal of FIG. 7 are unnecessary.

Information of "No corresponding cell" is also returned to the mobile station device 100 if there is no cell of which reception quality exceeds the predetermined threshold value even if the MBMS service is provided in the process in an active state or there is a neighboring cell having dMBMS cell information. The measurement cycle in the mobile station device 100 may be appropriately changed by sending a notification to which a reason why correspondence is absent is added. That is, the following control may be performed as in step S79 in the above-described idle time.
A time Ta as an initial cycle is set to a cycle Ts. If a cell from which a service is provided is not included in neighboring cell information provided in the base station device along with "No corresponding cell," Ts+Tb is set as the new Ts by adding a known constant Tb. At this time, if the new Ts exceeds the constant Tc, Tc is set as Ts.
If a cell from which a service is provided is included in neighboring cell information provided in the base station device in the case of "No corresponding cell" but a reception state of the mobile station device 100 is bad, the initial cycle Ta is set as Ts.

It is possible to promote the efficiency of measurement by notifying the mobile station device 100 of a corresponding cell ID when the reception quality is not satisfied and measuring and reporting only the reception quality of a corresponding cell.
That is, it is possible to efficiently use radio resources by notifying a mobile station device 100 requiring a service of the best cell candidate without transmitting a huge list of neighboring cells to the entire cell or a specific mobile station device 100.

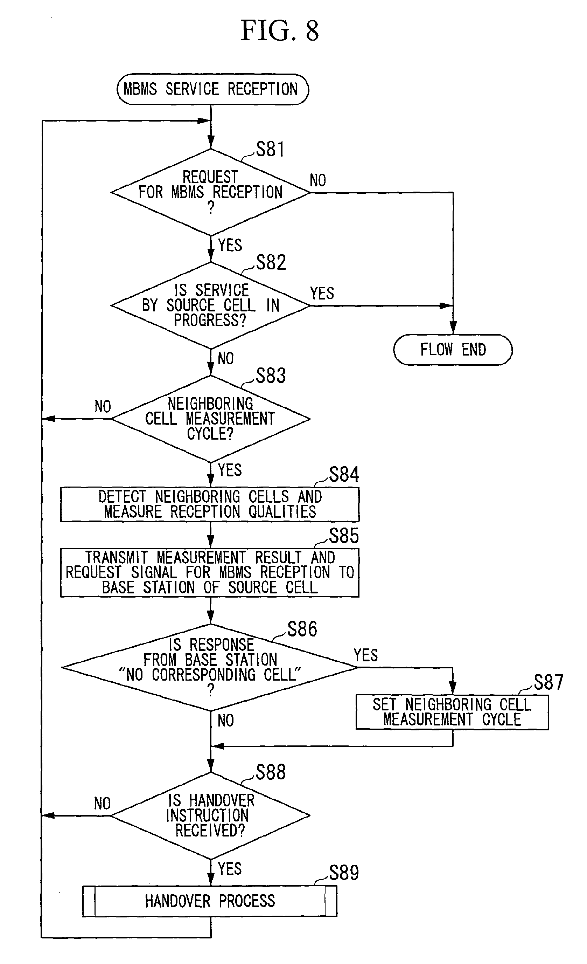

FIG. 8 is a flowchart showing a handover process in the mobile station device 100 in an active state according to the second embodiment of the present invention.
First, the mobile station device 100 determines whether or not its own mobile station device 100 tries to receive an MBMS (step S81). If the mobile station device 100 does not try to receive the MBMS ("No" in step S81), the mobile station device 100 ends the process of the flowchart of FIG. 8. If the mobile station device 100 tries to receive the MBMS ("Yes" in step S81), the mobile station device 100 determines whether or not the MBMS service by a source cell is in progress (step S82).

If the MBMS service by the source cell is in progress ("Yes" in step S82), the mobile station device 100 ends the process of the flowchart of FIG. 8. If the MBMS service by the source cell is not in progress ("No" in step S82), the mobile station device 100 determines whether or not a neighboring cell measurement cycle is reached, that is, whether or not a timing of a neighboring cell search is reached (step S83).
If the timing of the neighboring cell search is not reached ("No" in step S83), the mobile station device 100 performs step S81 again. If the timing of the neighboring cell search is reached ("Yes" in step S83), the mobile station device 100 detects neighboring cells and measures reception qualities (step S84).

Next, the mobile station device 100 transmits a measurement result and a request signal for MBMS service reception to the base station device of the source cell (step S85). The mobile station device 100 determines whether or not a response from the base station device is "No corresponding cell" (step S86).
In the case of "No corresponding cell" ("Yes" in step S86), the mobile station device 100 sets the neighboring cell measurement cycle by changing the neighboring cell measurement cycle (step S87), and performs the process of step S88.

If the response is not "No corresponding cell" ("No" in step S86) or after the process of step S87, the mobile station device 100 determines whether or not a handover instruction exists (step S88).
If the handover instruction does not exist ("No" in step S88), the mobile station device 100 performs step S81 again.
If the handover instruction exists ("Yes" in step S88), the mobile station device 100 performs a handover process (step S89), and performs the process of step S81 for a cell after the handover.
A cycle change process in step S87 is the same as the process of step S79 described above.

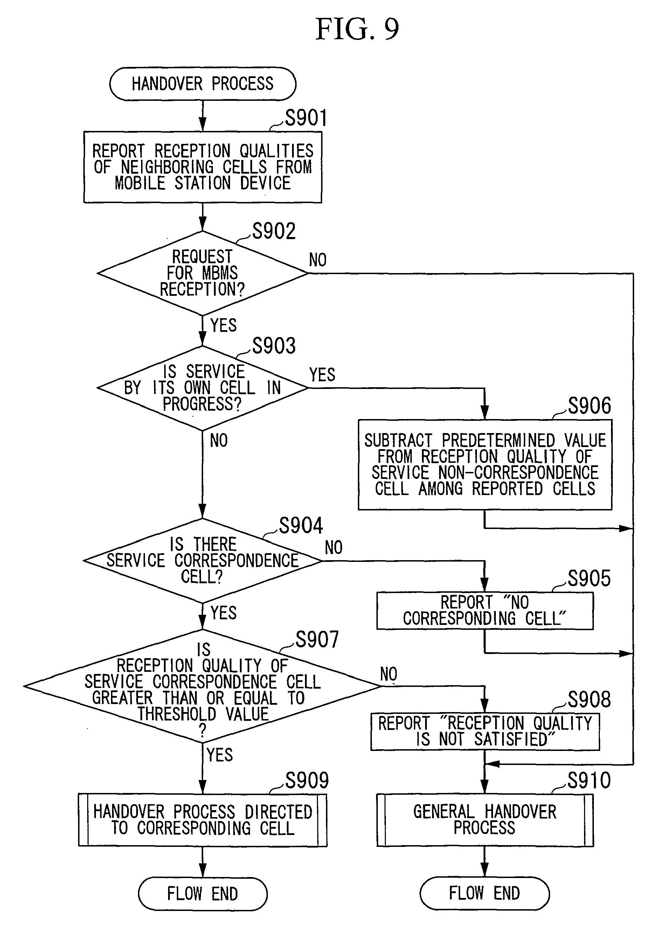

FIG. 9 is a flowchart showing a handover process in the base station device according to the second embodiment of the present invention.
First, the base station device receives a notification of reception qualities of neighboring cells and a request signal for MBMS reception from the mobile station device 100 (step S901). The request signal for MBMS reception may be reported in advance from the mobile station device 100 to the base station device.
The base station device determines whether or not the mobile station device 100 tries to receive the MBMS service (step S902). If the mobile station device 100 does not try to receive the MBMS service ("No" in step S902), a general handover process is performed (step S910) and the process of the flowchart of FIG. 9 is terminated.

If the mobile station device 100 tries to receive the MBMS service ("Yes" in step S902), the base station device determines whether or not the MBMS service by its own cell is in progress (step S903). If the base station device provides the MBMS service ("Yes" in step S903), the base station device subtracts a known value from the reception quality of a cell from which the MBMS service is not provided among the reported neighboring cells (step S906). The base station device may add a known value to reception qualities of cells from which the MBMS service is provided including its own cell.
The base station device performs a general handover process of step S910 to be described later using the reception quality calculated in step S906, and terminates the process of the flowchart of FIG. 9.

If the base station device does not provide the MBMS service ("No" in step S903), the base station device determines whether or not there is a cell from which the MBMS service is provided among the reported neighboring cells (step S904). If there is no corresponding cell ("No" in step S904), the base station device notifies the mobile station device 100 of "No corresponding cell" (step S905). The base station device performs the general handover process of step S910 to be described later and ends the process of the flowchart of FIG. 9.

If there is a cell from which the MBMS service is provided ("Yes" in step S904), the base station device determines whether or not the reception quality from a corresponding cell is greater than or equal to a predetermined threshold value (step S907). If the reception quality is less than the threshold value ("No" in step S907), the base station device notifies the mobile station device 100 of the fact that "Reception quality is not satisfied" (step S908), and performs the handover process of step S910.
If the reception quality is greater than or equal to the threshold value ("Yes" in step S907), the base station device performs the handover process directed to a corresponding cell to be described later (step SS909), and terminates the process of the flowchart of FIG. 9.

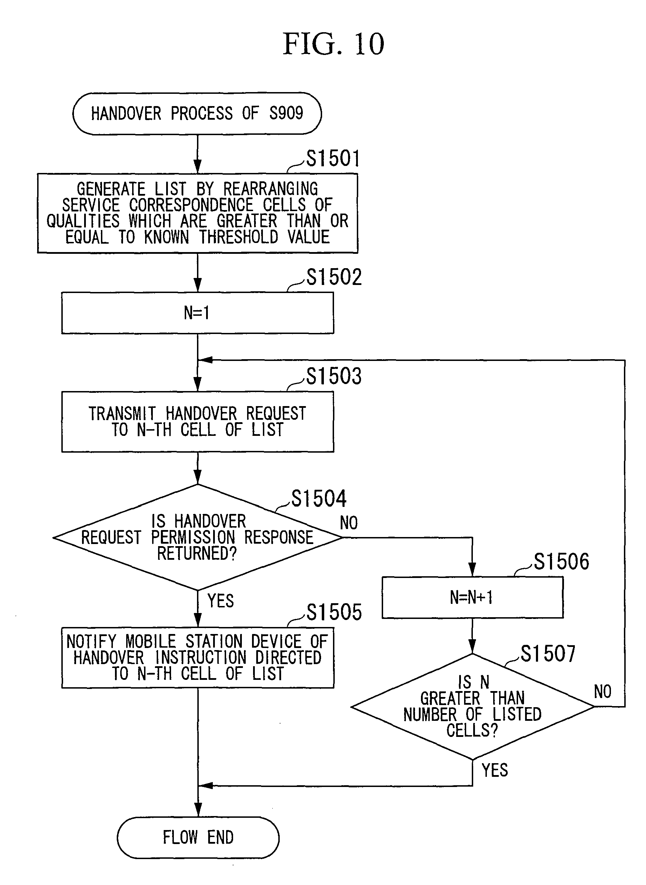

FIG. 10 is a flowchart showing the handover process of step S909 of FIG. 9.
First, the base station device generates a list by rearranging service correspondence cells of qualities, which are greater than or equal to a known threshold value, selected in step S904 (FIG. 9) in descending order of quality (step S1501).
To select a cell from the top of the list, the base station device sets an index N to 1 (step S 1502).
The base station device transmits a handover request to an N-th cell of the list (step S1503).
The base station device determines whether or not a handover request permission response is returned from the N-th cell within a predetermined period of time (step S1504).
If the handover request permission response is returned ("Yes" in step S1504), the base station device includes information regarding synchronization with the N-th cell in the handover instruction, and notifies the mobile station device 100 of the handover instruction (step S1505).
If there is no response in step S1504, the base station device adds 1 to N (step S1506). The base station device determines whether or not N exceeds the number of cells on the list (step S1507). If N exceeds the number of cells on the list, the base station device does not make the handover instruction for the mobile station device 100, and terminates the process of the flowchart of FIG. 10 ("Yes" in step S 1507). If N does not exceed the number of cells on the list, the base station device performs the process of step S1503 again ("No" in step S1507).

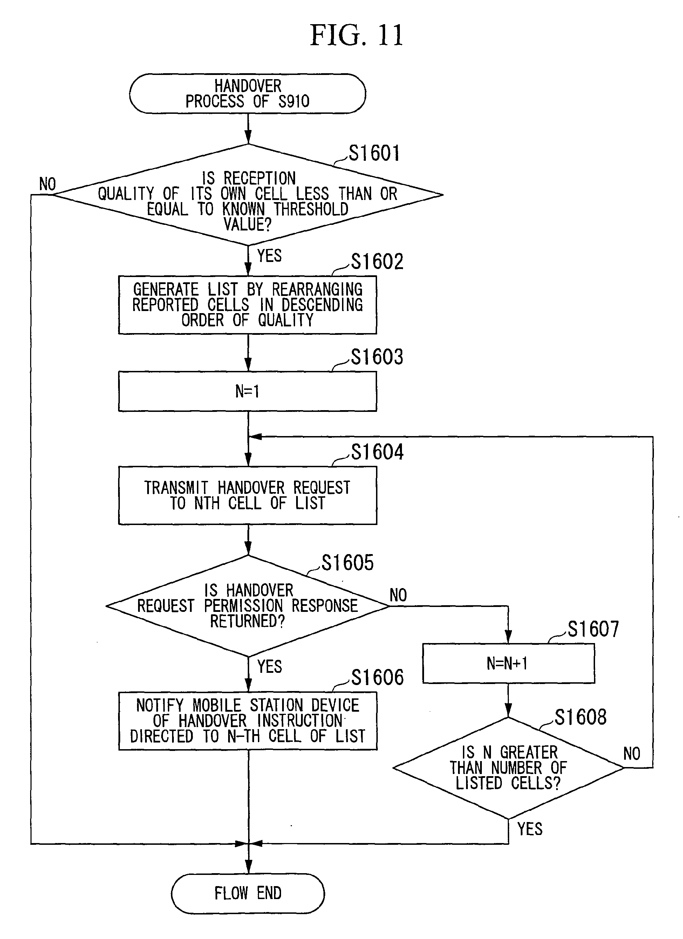

FIG. 11 is a flowchart showing the handover process of step S910 of FIG. 9.
First, the base station device determines whether or not the reception quality of its own cell reported from the mobile station device 100 is less than or equal to a known threshold value (step S1601).
If the reception quality of its own cell is not less than or equal to the known threshold value ("No" in step S1601), the base station device terminates the process of the flowchart of FIG. 11. If the reception quality of its own cell is less than or equal to the known threshold value ("Yes" in step S1601), the base station device generates a list by rearranging cells reported from the mobile station device 100 in descending order of quality (step S1602).
To select a cell from the top of the list, the base station device sets an index N to 1 (step S1603).
The base station device transmits a handover request to an N-th cell of the list (step S 1604).
The base station device determines whether or not a handover request permission response is returned from the N-th cell within a predetermined period of time (step S1605).
If the handover request permission response is returned ("Yes" in step S1605), the base station device includes information regarding synchronization with the N-th cell in the handover instruction, and notifies the mobile station device 100 of the handover instruction (step S1606).
If there is no response in step S 1605, the base station device adds 1 to N (step S1607). The base station device determines whether or not N exceeds the number of cells on the list (step S 1608). If N exceeds the number of cells on the list, the base station device does not make the handover instruction for the mobile station device 100, and terminates the process of the flowchart of FIG. 11 ("Yes" in step S1608). If N does not exceed the number of cells on the list, the base station device performs the process of step S1604 again ("No" in step S1608).

In this embodiment, the mobile station device 100 is not affected by reception quality of the source cell, and measures and reports neighboring cells in an efficient measurement cycle set based on a response from the base station device. Thereby, the mobile station device 100 can easily receive a service tried to receive by the mobile station device 100. The base station device can perform a handover process based on a service tried to receive by the mobile station device without notifying the mobile station device 100 of a large amount of neighboring cell information to which service correspondence information provided in its own station is added for the mobile station device 100 using radio resources as definite resources.

A more efficient measurement cycle is set for the mobile station device 100 by reporting the reason why the service is not provided from the base station device to the mobile station device 100. Thereby, it is possible to suppress an excessive neighboring cell search and it is possible to save power of the mobile station device 100.

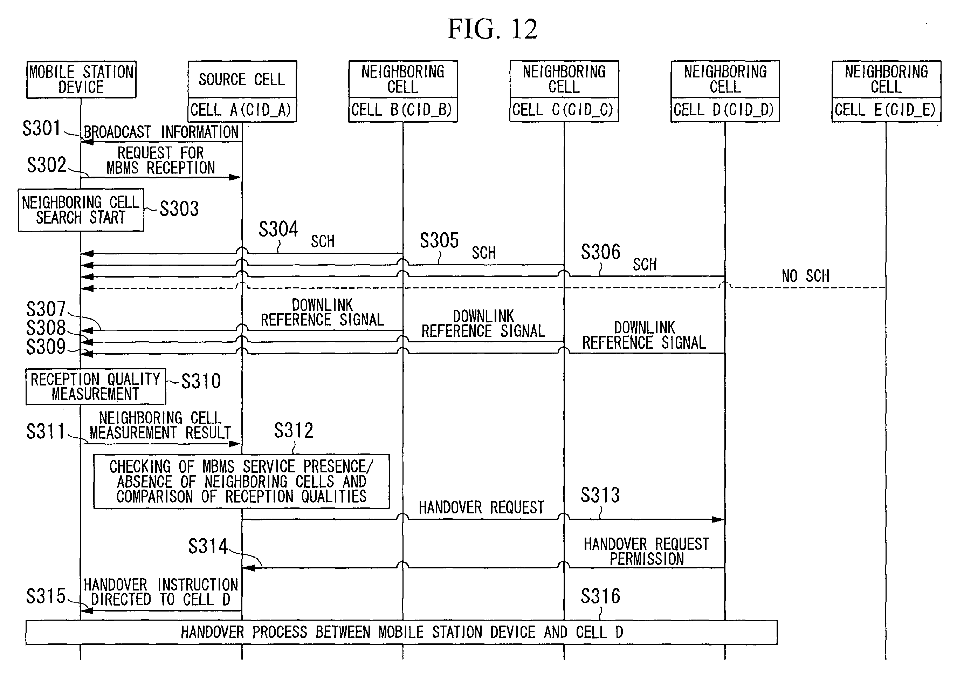

FIG. 12 is a sequence diagram showing another example of the process of the mobile communication system according to the second embodiment of the present invention.
First, the cell A (CID_A) as the source cell notifies the mobile station device 100 of broadcast information including presence/absence information indicating whether or not its own cell provides an MBMS (step S301). When a connection to the base station device of the cell A (CID_A) or a network is established, the mobile station device 100 notifies the cell A (CID_A) of a service tried to receive by the mobile station device 100 (here, the MBMS) (step S302). Upon notification, a control signal of each layer, information indicating the performance of the mobile station device 100, or the like can be used.

Next, if the reception quality of the cell A (CID_A) is less than a predetermined threshold value, the mobile station device 100 starts a neighboring cell search (step S303). The mobile station device 100 may change the predetermined threshold value based on presence/absence information of the MBMS of the cell A (CID_A) acquired from broadcast information of the cell A.
The cell B (CID_B), the cell C (CID_C), and the cell D (CID_D) as neighboring cells respectively transmit synchronization channels (SCHs) to the mobile station device 100 (steps S304, S305, and S306). The cell E (CID_E) as the neighboring cell does not transmit an SCH to the mobile station device 100.

The cell B (CID_B), the cell C (CID_C), and the cell D (CID_D) transmit downlink reference signals to the mobile station device 100 (steps S307, S308, and S309).
The mobile station device 100 measures reception qualities from the respective cells based on the downlink reference signals transmitted from the neighboring cells (step S310).
The reception qualities from the neighboring cells measured by the mobile station device 100 are reported to the base station device of the cell A (CID_A) (step S311).

The base station device of the cell A (CID_A) determines a cell of a handover destination by checking the presence/absence of the MBMS service of the neighboring cells and simultaneously comparing the reception qualities from the neighboring cells (step S312).
For example, the base station device of the cell A (CID_A) determines a cell of the handover destination by correcting values of the reception qualities from the neighboring cells reported from the mobile station device 100 so that a value of a neighboring cell from which a service tried to receive by the mobile station device 100 is provided becomes good reception quality. Here, the case where the cell D (CID_D) is determined as the handover destination in step S312 will be described.

The base station device of the cell A (CID_A) transmits the handover request to the cell D (CID_D) (step S313). On the other hand, the base station device of the cell D (CID_D) transmits a handover request permission response to the base station device of the cell A (CID_A) (step S314).
The base station device of the cell A (CID_A) transmits a handover instruction directed to the cell D (CID_D) to the mobile station device 100 (step S315).
The handover process is performed between the mobile station device 100 and the base station device of the cell D (CID_D) (step S316). Since the handover process is the same as that of the related art, a detailed description thereof is omitted.
The mobile station device 100 does not need a list of neighboring cells when performing the process of FIG. 12, and can easily receive a service tried to receive by the mobile station device 100.

A mobile communication system according to the second embodiment has a mobile station device 100 (FIG. 1) and a base station device 200 (FIG. 3).
The downlink reference signal processing unit 107 (also referred to as a reception quality measurement unit) of the mobile station device 100 measures reception quality based on a reference signal transmitted from the base station device of the source cell or the neighboring cell (steps S208 of FIG. 7).
A transmission unit 110 (also referred to as a first transmission unit) of the mobile station device 100 transmits information of an MBMS as a service tried to receive by its own mobile station device 100 and information of reception quality measured by the downlink reference signal processing unit 107 to the base station device 200 (steps S209 and S210 of FIG. 7).
The transmission unit 110 and the reception unit 101 (also referred to as a communication unit) of the mobile station device 100 perform a handover process on a base station device specified by information of the base station device transmitted from the base station device 200, and communicate with the base station device (step 217 of FIG. 7).
The determination unit 211 included in the upper layer 210 of the base station device 200 determines a base station device of a handover destination which communicates with the mobile station device 100 based on service information (here, information indicating that a service tried to receive by the mobile station device 100 is the MBMS) transmitted by the transmission unit 110 of the mobile station device 100 as an upper-layer control signal and information of reception quality of a reference signal transmitted from a neighboring base station device measured by the downlink reference signal processing unit 107 of the mobile station device 100 (step S211 of FIG. 7 and the flowchart of FIG. 9).
A transmission unit 209 (also referred to as a second transmission unit) of the base station device 200 transmits information of the base station device determined by the determination unit 211 as an upper-layer control signal to the mobile station device 100 (step S216 of FIG. 7).

### (Third Embodiment)

Next, the third embodiment of the present invention will be described. In the second embodiment, the case where a handover process is performed after the base station device determines the presence/absence of provision of the MBMS service for a neighboring cell for which the mobile station device 100 measures reception quality will be described.
In the third embodiment, a cell ID of a neighboring cell for which measurement is performed is reported in advance from the base station device to the mobile station device 100. The mobile station device 100 measures and reports only the reception quality of the neighboring cell reported from the base station device.

Since the mobile station device 100 (FIG. 1) or the base station device 200 (FIG. 3) described in the first embodiment may be used as the mobile station device or the base station device used in this embodiment, a detailed description thereof is omitted.
Since a cell configuration used in this embodiment is also the same as that shown in the first embodiment (FIG. 4), a description thereof is omitted.

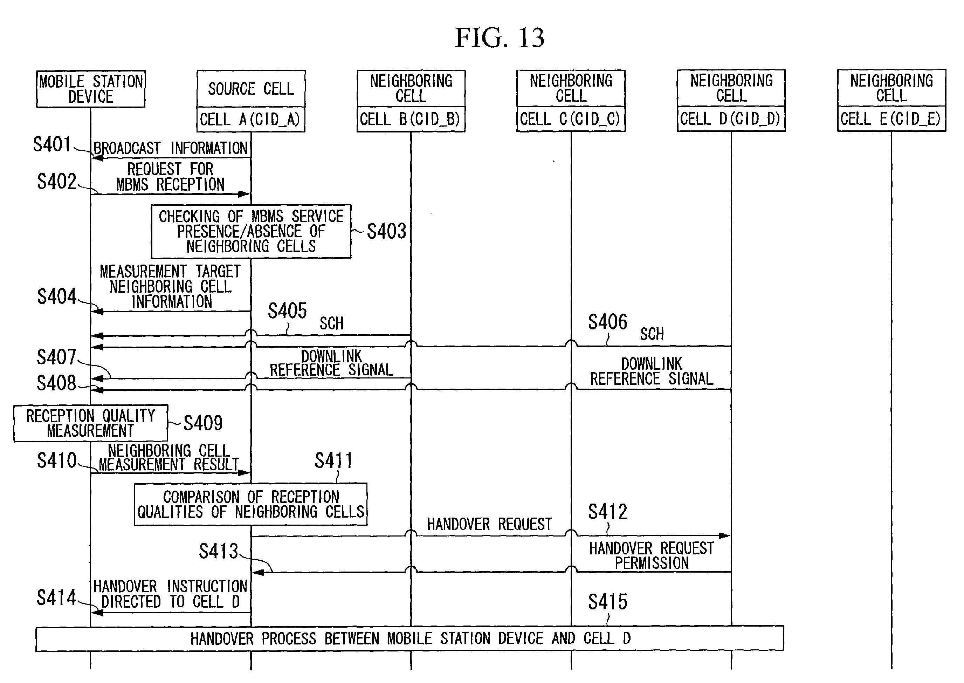

FIG. 13 is a sequence diagram showing a process of the mobile communication system according to the third embodiment of the present invention. FIG. 13 shows a handover process in the mobile station device 100 in an active state. The mobile station device 100 is in a state before the measurement of reception qualities of a serving cell and neighboring cells is started or in a state during which the reception qualities are measured. A list of neighboring cells is not provided from a cell A (CID_A).

First, the mobile station device 100 acquires information indicating whether or not the MBMS service is provided from the cell A (CID_A) based on broadcast information received from the cell A (CID_A) (step S401). Here, the case where the mobile station device 100 acquires information indicating that the cell A (CID_A) does not provide the MBMS service by the broadcast information received from the cell A (CID_A) will be described.
The mobile station device 100 also notifies the cell A (CID_A) of a request signal for MBMS reception (step S402). The request signal for MBMS reception may be reported as a lower-layer control signal simultaneously with a notification of a measurement result, may be reported in advance as an upper (L2/L3) layer control signal, and may be reported as one parameter of information (UE capability) indicating the performance of the mobile station device 100 at the time of an initial connection.

The base station device of the source cell A (CID_A) receives the request signal for MBMS reception from the mobile station device 100. When the mobile station device 100 tries to receive the MBMS, the base station device of the cell A (CID_A) searches for the presence/absence of a cell from which the MBMS service is provided or a cell having dMBMS cell information from neighboring cell information held in its own station (step S403). If there is no corresponding cell, the base station device of the cell A (CID_A) returns information of "No corresponding cell" to the mobile station device 100. It is preferable that the notification should be transmitted as an upper-layer control signal. Alternatively, the notification may be determined as "No corresponding cell" if a response to the mobile station device 100 is absent for a fixed period of time.

The mobile station device 100 notified of the fact that there is no corresponding cell changes a measurement cycle like the detection process cycle of the second embodiment, performs cell detection, and retransmits a notification to the base station device if an update exists in a detection result. When there are corresponding cells, the cell A (CID_A) notifies the mobile station device 100 of ID information of the corresponding cells or the like as measurement target neighboring cell information or as a lower-layer control signal or an upper-layer control signal (step S404).
The mobile station device 100 receiving the measurement target neighboring cell information (for example, the cells B and D) detects the cell B (CID_B) and the cell D (CID_D) using SCHs to be transmitted in steps S405 and S406 or downlink reference signals to be transmitted in steps S407 and S408.

The mobile station device 100 measures the reception quality of each cell using the downlink reference signal of the detected cell (for example, the cell D) (step S409). The mobile station device 100 notifies the source cell A (CID_A) of measured quality information (step S410). The base station device of the cell A (CID_A) compares reception qualities of the neighboring cells (step S411). When the reception quality of the cell reported from the mobile station device 100 is greater than or equal to a predetermined threshold value, the base station device of the cell A (CID_A) instructs a cell (here, the cell D) having the best reception quality among corresponding cells to perform a handover for the mobile station device 100 (step S414).
The base station device of the cell A (CID_A) as the source cell transmits a handover request to the cell D (CID_D) (step S412). On the other hand, the base station device of the cell D (CID_D) transmits a handover request permission response to the base station device of the cell A (CID_A) (step S413).

The mobile station device 100 performs the handover process with the cell D (CID_D) (step S415). Since the handover process is the same as the process of the related art, a description thereof is omitted here.
If user-specific authentication or the like is unnecessary for MBMS reception, the MBMS parameter request signal and the service permission signal of FIG. 13 are unnecessary.
When there is no cell from which reception quality exceeds the threshold value, information such as "No corresponding cell" or "Reception quality is not satisfied" is transmitted as a response to the mobile station device as in the second embodiment.
Only cells of qualities which are greater than or equal to a known threshold value may be reported in advance in the cell list reported in step S410 within the mobile station device 100 of this embodiment. Thereby, it is possible to omit a process of comparing the reception quality of a cell reported from the mobile station device 100 with a predetermined threshold value in the base station device.

A mobile communication system according to the third embodiment has a mobile station device 100 (FIG. 1) and a base station device 200 (FIG. 3).
The downlink reference signal processing unit 107 (also referred to as a reception quality measurement unit) of the mobile station device 100 measures reception quality based on a reference signal transmitted from the base station device of the source cell or the neighboring cell (steps S409 of FIG. 13).
A transmission unit 110 (also referred to as a first transmission unit) of the mobile station device 100 transmits information of an MBMS as a service tried to receive by its own mobile station device 100 and information of reception quality measured by the downlink reference signal processing unit 107 to the base station device 200 (steps S402 and S410 of FIG. 13).
The transmission unit 110 and the reception unit 101 (also referred to as a communication unit) of the mobile station device 100 perform a handover process on a base station device specified by information of the base station device transmitted from the base station device 200, and communicate with the base station device (step 415 of FIG. 13).
The determination unit 211 included in the upper layer 210 of the base station device 200 determines a base station device of a handover destination which communicates with the mobile station device 100 based on service information (here, information indicating that a service tried to receive by the mobile station device 100 is the MBMS) transmitted by the transmission unit 110 of the mobile station device 100 as an upper-layer control signal and information of reception quality of a reference signal transmitted from a neighboring base station device measured by the downlink reference signal processing unit 107 of the mobile station device 100 (steps S403 and S411 of FIG. 13).
A transmission unit 209 (also referred to as a second transmission unit) of the base station device 200 transmits information of the base station device determined by the determination unit 211 as an upper-layer control signal to the mobile station device 100 (step S414 of FIG. 13).

In this embodiment, the mobile station device 100 is not affected by reception quality of the source cell, and measures and reports neighboring cells in an efficient measurement cycle set based on a response from the base station device. Thereby, the mobile station device 100 can easily receive a service tried to receive by the mobile station device 100. The base station device can select and report only cell information based on a service tried to receive by each mobile station device 100 among a large amount of neighboring cell information to which service correspondence information provided in its own station is added for the mobile station device 100. Thereby, it is possible to perform a handover process based on a service tried to receive by the mobile station device 100 while effectively using radio resources.

In the above-described embodiments, control of a mobile station device or a base station device may be executed by recording a program for implementing functions of respective parts of the mobile station device or the base station device or a part of the functions on a computer readable recording medium of the decoding device or reception device and enabling a computer system to read and execute the program recorded on the recording medium. The "computer system" used herein includes an OS and hardware, such as peripheral devices.
The "computer readable recording medium" may be a portable medium such as a flexible disc, a magneto-optical disc, a ROM or a CD-ROM, or a storage device, such as a hard disk, built in the computer system. Furthermore, the "computer readable recording medium" may also include a medium that dynamically holds a program for a short period of time, such as a communication line when a program is transmitted via a network such as the Internet or a communication network such as a telephone network, and a medium that holds a program for a fixed period of time, such as a volatile memory in a computer system serving as a server or client in the above situation. The program may be one for implementing part of the above functions, or the above functions may be implemented in combination with a program already recorded on the computer system.

The embodiments of the present invention have been described in detail with reference to the drawings. However, specific configurations are not limited to the embodiments and may include any design in the scope without departing from the subject matter of the present invention.

### Industrial applicability

The present invention is applicable to a mobile communication system, a mobile station device, a base station device, and a mobile communication method that can improve the reception characteristics or frequency use efficiency without imposing a heavy load on radio resources or a mobile station device.

### Reference Symbols

- 100:: Mobile station device
- 101:: Reception unit
- 102:: Demodulation unit
- 103:: Control unit
- 104:: Control signal processing unit
- 105:: Data processing unit
- 106:: Broadcast information processing unit
- 107:: Downlink reference signal processing unit
- 108:: Encoding unit
- 109:: Modulation unit
- 110:: Transmission unit
- 111:: Upper layer
- 200:: Base station device
- 201:: Reception unit
- 202:: Demodulation unit
- 203:: Control unit
- 204:: Data processing unit
- 205:: Control signal processing unit
- 206:: Encoding unit
- 207:: Modulation unit
- 209:: Transmission unit
- 210:: Upper layer
- A1, A2:: Antenna

## Claims

1. A mobile communication system comprising a mobile station device and a base station device,
wherein the mobile station device comprises:
a reception quality measurement unit which measures reception qualities based on signals transmitted from neighboring base station devices;
a determination unit which determines a base station device with which the mobile station device communicates, based on a service tried to receive by the mobile station device and the reception qualities measured by the reception quality measurement unit; and
a communication unit which communicates with the base station device determined by the determination unit.

2. A mobile communication system comprising a mobile station device and a base station device,
wherein the mobile station device that is communicating with the base station device comprises:
a reception quality measurement unit which measures reception qualities based on signals transmitted from neighboring base station devices around the base station device with which the mobile station device is communicating and a service execution situation of the base station device with which the mobile station device is communicating;
a first transmission unit which transmits information of a service tried to receive by the mobile station device and information of the reception qualities measured by the reception quality measurement unit to the base station device; and
a communication unit which communicates with a base station device specified by information of the base station device transmitted from the base station device, and
the base station device comprises:
a determination unit which determines a base station device with which the mobile station device communicates, based on the service information and the reception quality information transmitted by the first transmission unit and the service execution situation of its own base station device; and
a second transmission unit which transmits information of the base station device determined by the determination unit to the mobile station device.

3. The mobile communication system according to claim 2, wherein the reception quality measurement unit changes a reception quality measurement cycle based on the information of the base station device transmitted by the second transmission unit and the service execution situation of the base station device.

4. The mobile communication system according to claim 3, wherein the information of the base station device indicates one of a service providing cell absence, a reception quality dissatisfaction, and a handover instruction.

5. The mobile communication system according to claim 1 or 2, wherein the service is a multimedia broadcast/multicast service.

6. The mobile communication system according to claim 1 or 2, wherein a base station device which provides a multimedia broadcast/multicast service prevents a synchronization channel from being transmitted to the mobile station.

7. A mobile station device that communicates with a base station device, the mobile station device comprising:
a reception quality measurement unit which measures reception quality based on a signal transmitted from the base station device and a service execution situation of the base station device;
a determination unit which determines a base station device with which the mobile station device communicates, based on a service tried to receive by the mobile station device and the reception quality measured by the reception quality measurement unit; and
a communication unit which communicates with the base station device determined by the determination unit.

8. A base station device that communicates with a mobile station device, the base station device comprising:
a determination unit which determines a base station device with which the mobile station device communicates, based on information of a service tried to receive by the mobile station device and information of reception qualities of signals, transmitted from neighboring base station devices, measured by the mobile station device; and
a second transmission unit which transmits information of the base station device determined by the determination unit to the mobile station device.

9. A mobile communication method using a mobile station device and a base station device, the mobile communication method comprising:
measuring, by the mobile station device, reception qualities based on signals transmitted from neighboring base station devices;
determining, by the mobile station device, a base station device with which the mobile station device communicates, based on a service tried to receive by the mobile station device and the reception qualities measured by the reception quality measurement unit; and
communicating, by the mobile station device, with the base station device determined by the determination.

10. A mobile communication method using a mobile station device and a base station device, the mobile communication method comprising:
measuring, by the mobile station device, reception qualities based on signals transmitted from neighboring base station devices;
transmitting, by the mobile station device, information of a service tried to receive by the mobile station device and information of the reception qualities measured in the measurement to the base station device;
communicating, by the mobile station device, with a base station device specified by information of the base station device transmitted from the base station device,
determining, by the base station device, a base station device with which the mobile station device communicates, based on the service information and the reception quality information transmitted in the transmission; and
transmitting information of the base station device determined in the determination to the mobile station device.
